# EUROPEAN PATENT SPECIFICATION

(11) **EP 2 750 403 B1**
(45) Date of publication and mention of the grant of the patent: **06.03.2019**
(21) Application number: 13173684.5
(22) Date of filing: 26.06.2013
(51) Int. Cl.: H04N 21/45, G06F 3/0482

(54) **Method and apparatus for screen navigation history management**
Verfahren und Vorrichtung für Bildschirmnavigationshistorienverwaltung
Procédé et appareil de gestion d'historique de navigation par écran

(30) Priority: 28.12.2012 KR 20120156378
(43) Date of publication of application: 02.07.2014
(73) Proprietor: Alticast Corporation, Seoul 06655 (KR)
(72) Inventor: Nam, Sung-Woo, Seoul 100-754 (KR)
(74) Representative: Zardi, Marco

(56) References cited:
- WO-A2-2008/112281
- US-A1- 2008 082 935
- US-A1- 2008 163 127
- US-A1- 2009 204 929
- US-B1- 6 978 473

## Description

### CROSS-REFERENCE TO RELATED APPLICATIONS

This application claims the benefit of Korean Patent Application No. 10-2012-0156378, filed with the Korean Intellectual Property Office on December 28, 2012.

### BACKGROUND

### 1. Technical Field

The present invention relates to a method and apparatus for saving and managing a history of screen navigation paths to allow access to a particular screen or service desired by the user.

### 2. Description of the Related Art

Whereas in the past the TV set was for providing unidirectional services only, the active research in recent times on digital broadcast standards has made it possible to compress broadcast signals, which may include video, audio, and data, into digital signals, thereby allowing multiple channels. Increases in network processing capacity have also led to the advent of bidirectional broadcast services.

Based on such improvements in the performance of the set-top box or TV set as well as increases in network bandwidth, various types of services are being provided, including not only live programs, which have been provided in the past, but also various on-demand programs requested by the user. Of course, the various services currently being provided also include games, shopping, etc., in addition to real-time or on-demand programming. As such, in order to search for a particular service by manipulating a set-top box or a TV, a user may have to manipulate several remote controls. Although a function for returning to a previous menu is currently available, this merely entails simply returning to the immediately prior menu and does not enable easy access to the various services being used.

The document US 2008/0163127 A1 discloses a technology for performing navigation in a media environment involving presenting a user previously visited pages.

### SUMMARY

An aspect of the invention is to provide a method and apparatus for managing screen navigation history that are capable of saving and managing a history of menu navigation paths to allow access to a particular screen or a particular service desired by the user. The subject-matter of the invention is set out in the claims.

### BRIEF DESCRIPTION OF THE DRAWINGS

FIG. 1 is a block diagram schematically illustrating the internal composition of an apparatus for history management according to an embodiment of the invention.
FIG. 2 is a flowchart illustrating a method of saving a screen navigation history list according to an embodiment of the invention.
FIG. 3 is a flowchart illustrating a method of showing a screen navigation history list according to an embodiment of the invention.
FIG. 4, FIG. 5, FIG. 6, and FIG. 7 each illustrate an example of a screen showing a screen navigation history list according to an embodiment of the invention.

### DETAILED DESCRIPTION

As the present invention allows for various changes and numerous embodiments, particular embodiments will be illustrated in the drawings and described in detail in the written description. However, this is not intended to limit the present invention to particular modes of practice, and it is to be appreciated that changes, equivalents, and substitutes are possible. In describing the drawings, like reference numerals are used for like elements.

While such terms as "first" and "second," etc., may be used to describe various components, such components must not be limited to the above terms. The above terms are used only to distinguish one component from another.

The terms used in the present specification are merely used to describe particular embodiments, and are not intended to limit the present invention. An expression used in the singular encompasses the expression of the plural, unless it has a clearly different meaning in the context. In the present specification, it is to be understood that the terms such as "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Certain embodiments of the invention will be described below in more detail with reference to the accompanying drawings.

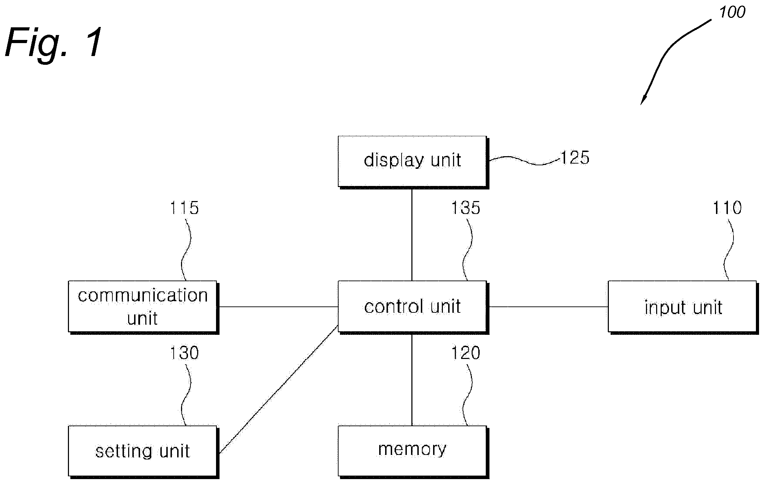

FIG. 1 is a block diagram schematically illustrating the internal composition of an apparatus for history management according to an embodiment of the invention.

Referring to FIG. 1, an apparatus 100 for history management according to an embodiment of the invention may include an input unit 110, a communication unit 115, a memory 120, a display unit 125, a setting unit 130, and a control unit 135.

The input unit 110 may serve to receive a manipulation signal resulting from a user's manipulation of a remote control. For example, the input unit 110 can include an infrared communication module. In another example, if the history management apparatus 100 is equipped with a touch panel, the input unit 110 can also be the touch panel.

The communication unit 115 may serve to exchange data with other devices over a communication network. For example, the communication unit 115 can request a real-time or an on-demand program from a headend (not shown), according to the control of the control unit 135, and receive the corresponding real-time or on-demand program.

The memory 120 may store various applications necessary for operating a history management apparatus 100 according to an embodiment of the invention. Also, the memory 120 may store a screen navigation history list that includes screen navigation paths or menu navigation paths corresponding to the user's manipulation of the remote control. Here, the screen navigation history list can provide greater ease in moving to the page of a particular screen in accordance with a navigation between screens corresponding to the user's manipulation on the remote control. Of course, the screen navigation history list can further include menu navigation paths for providing greater ease in accessing various services such as shopping, games, and broadcast-related programs such as real-time programs and video on-demand (VOD) programs, etc. In cases where the screen navigation history list includes navigation paths between menus, the navigation paths between menus can also include a navigation path to at least one of the sub-menus of a particular menu.

The screen navigation history list can include at least one screen navigation history item. Here, each screen navigation history item can include a navigation path for accessing a particular screen, a particular service, or a particular menu. Also, each screen navigation history item can be assigned a shortcut key, to enable direct access to a particular screen, a particular service, or a particular menu on the overall navigation path for accessing a screen, service, or menu. In this case, the user can refer to the screen navigation history list shown on the screen and use the remote control to input a particular shortcut key to easily move to a particular screen navigation history item within the screen navigation history list. Thus, the user can move directly to a particular screen navigation history item or an arbitrary point on the navigation path included in the screen navigation history item, for greater convenience.

Each screen navigation history item can further include the name of the particular screen, menu, or service. Here, the representative name shown for the screen navigation history item can be the name of the lowest-level menu or of the particular service. Here, the lowest-level menu refers to the menu at the lowest level when there are a multiple number of levels subordinate to a particular menu. For example, if a first menu is "movies", and there are two menu levels "romance" and "action" as sub-menus of the first menu, the lowest-level menu can be "romance" or "action", i.e. a menu at the lowest level.

In another example, a screen navigation history item can further include a thumbnail image for a particular screen or a particular page. In the present specification, a particular page can refer to visual information for showing on the screen as a result of navigating between different screens, or can refer to visual information shown on the same screen without actually navigating between screens. Showing a thumbnail image for each screen navigation history item in this manner when showing the screen navigation history list also provides the advantage of allowing more intuitive perception by the user.

The display unit 125 may serve to show various data in the form of visual information according to the control of the control unit 135.

For example, the display unit 125 can show the screen navigation history list according to the control of the control unit 135. The display unit 125 can use an OSD (on-screen display) function to show the screen navigation history list in an area of the screen.

The OSD function is well known to those skilled in the art and thus will not be described here in detail.

The setting unit 130 may serve to receive and manage settings for a setting condition regarding automatically saving the screen navigation history list and a setting state regarding whether or not to show the screen navigation history list.

Here, the setting condition can include at least one of enabling automatic saving and disabling automatic saving. That is, if the user manipulates the remote control and sets the setting condition to enabling automatic saving, then the control unit 135 can generate a screen navigation history item for a path of menu navigation, even when there is no separate manipulation signal received from the remote control, and can store and manage the screen navigation history list with the generated screen navigation history item included in the screen navigation history list.

In one example, even when the setting condition is set to enabling automatic saving, the control unit 135 can generate a screen navigation history item for a corresponding service and include it in the screen navigation history list, only if a predetermined set of conditions are met (e.g. whether or not a usage frequency exceeds a threshold, a recent usage period is within a reference period, etc.). Here, the usage frequency may refer to the usage frequency of a particular screen, menu, service, or page.

To this end, the control unit 135 can separately store and manage a log of navigation paths for each screen navigation history item.

Also, the setting state, which is a setting regarding whether or not the screen navigation history list is to be shown, can be for enabling the showing or disabling the showing.

For example, the setting state may be set to a disable showing state by default. Afterwards, if a show-history manipulation signal is received via the remote control, then the setting unit 130 may change the setting by toggling the setting state to an enable showing state. Then, if a show-history manipulation signal is received again from the remote control, then the setting unit 130 may change the setting by toggling the setting state to a disable showing state.

The control unit 135 may serve to control the internal components (e.g. the input unit 110, communication unit 115, memory 120, display 125, etc.) of a history management apparatus 100 according to an embodiment of the invention.

Also, the control unit 135 can provide the control by which the screen navigation history list is saved including a navigation path (e.g. at least one of a navigation path between screens, a navigation path to a particular page in the screen, and a menu navigation path for accessing a particular menu or service) according to a manipulation signal received through the input unit 110 from the remote control, and is shown on the display unit 125.

In another embodiment, the control unit 135 can also generate a screen navigation history item for a navigation path corresponding to navigation between screens, a navigation to a screen page, or a menu navigation for accessing a particular service, regardless of receiving a manipulation signal from the remote control, and save it in the screen navigation history list.

Also, the control unit 135 can determine whether to show or hide the screen navigation history list on the display unit 125 according to the setting state. For example, if the setting state is in an enable showing state, the control unit 135 can provide the control such that the screen navigation history list is shown via the display unit 125, and if the setting state is in a disable showing state, the control unit 135 can provide the control such that the screen navigation history list is not shown via the display unit 125.

In providing the control for showing the screen navigation history list, if there are a multiple number of screen navigation history items saved in the screen navigation history list, the control unit 135 can provide the control to order the screen navigation history list such that the most recently saved screen navigation history item is placed at the top position.

Also, the control unit 135 can show the screen navigation history list ordered such that the screen navigation history item most recently used by the user is placed at the top.

In another embodiment, the control unit 135 can differentiate the screen navigation history items that were saved automatically and the screen navigation history items that were saved by the user. The control unit 135 can order the screen navigation history items such that the screen navigation history items saved by the user are positioned at the top when showing the screen navigation history list via the display unit 125.

In this case, the control unit 135 can use different visual information in representing the screen navigation history items saved automatically and the screen navigation history items saved by the user for differentiation, and can also apply separate visual information in representing the screen navigation history items saved by the user.

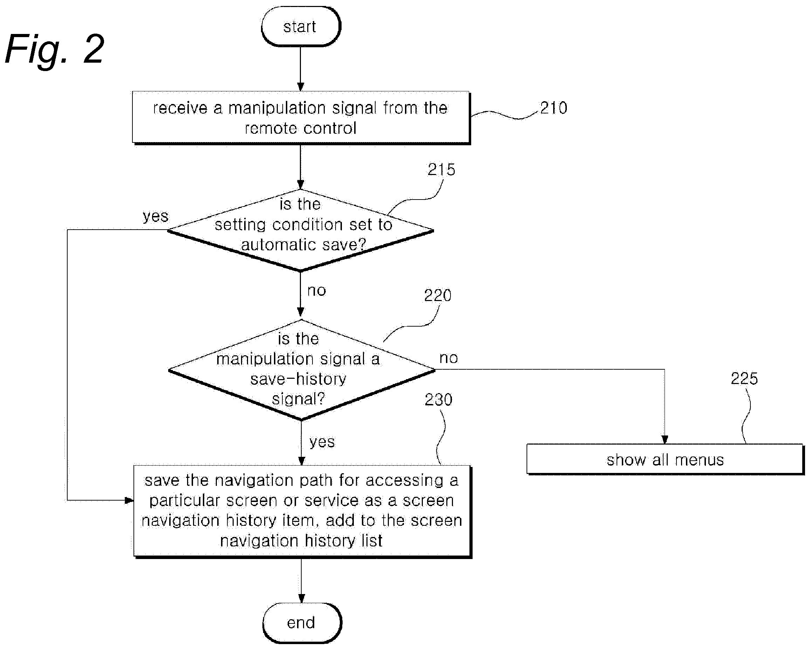

FIG. 2 is a flowchart illustrating a method of saving a screen navigation history list according to an embodiment of the invention. Each of the operations described below may be performed by an individual component of the history management apparatus 100, but for better understanding and explanation, the operations will simply be described as being performed by the history management apparatus 100.

In operation 210, the history management apparatus 100 may receive a manipulation signal from a remote control. Here, the manipulation signal can be a manipulation signal for navigating between screens, navigating to a particular page within a screen or service, or a menu navigation for accessing a particular service.

For better understanding and easier explanation, the descriptions in the present specification are provided using an example in which the manipulation signal is received from a remote control, on the assumption that the history management apparatus 100 is a broadcast-receiving apparatus connected with a TV or a TV equipped with a broadcast-receiving function. However, in other examples, the history management apparatus 100 can an apparatus equipped with a touch panel, etc., in which case the history management apparatus 100 can obviously sense a user's manipulation signal on the touch panel as an input signal.

In operation 215, the history management apparatus 100 may determine whether or not the setting condition for saving the screen navigation history list of the history management apparatus 100 is set to automatic save.

For better understanding and easier explanation, it will be assumed that the setting condition is preset by the user. Of course, the user can change the setting condition to the automatic save setting during the course of manipulating the remote control for accessing a screen or service.

If the setting condition is not set to the automatic save setting condition, then in operation 220, the history management apparatus 100 may determine whether or not the manipulation signal is a save-history signal.

If the manipulation signal is not a save-history signal, then in operation 225, the history management apparatus 100 may show a screen on the display unit 125 in accordance with the menu manipulation, in the same manner as in the related art.

However, if the manipulation signal is a save-history signal, then in operation 230, the history management apparatus 100 may generate a screen navigation history item for the navigation path, include the navigation path in the screen navigation history item, and add it to screen navigation history list. Here, the name of the screen navigation history item can be saved as the service name corresponding to the lowest-level path menu manipulation. Of course, the name of the screen navigation history item can also be directly inputted by the user via the remote control.

Here, if the generating of the screen navigation history item for accessing the service is due to an automatic save setting, then the history management apparatus 100 may determine whether or not a pre-designated condition for automatic saving (referred to herein as "automatic save condition" for convenience) is met. If the automatic save condition is met, a screen navigation history item corresponding to the service can be generated and included in the screen navigation history list. Here, the automatic save condition can be, for example, a usage frequency for the menu for accessing the service, or a usage period of a particular screen, page, or menu. As described above, a log can be stored in the history management apparatus 100 detailing the usage of menus for accessing services.

Also, the navigation path included in a screen navigation history item can include only a navigation path of at least one of a screen, a particular page, and a particular menu selected by the user via the remote control.

Thus, the navigation paths for accessing at least one of a particular screen, a particular page, and a particular service can be added to the screen navigation history list as unit screen navigation history items, while the history management apparatus 100 can provide the control to show a screen on the display unit 125 according to the manipulation on the remote control.

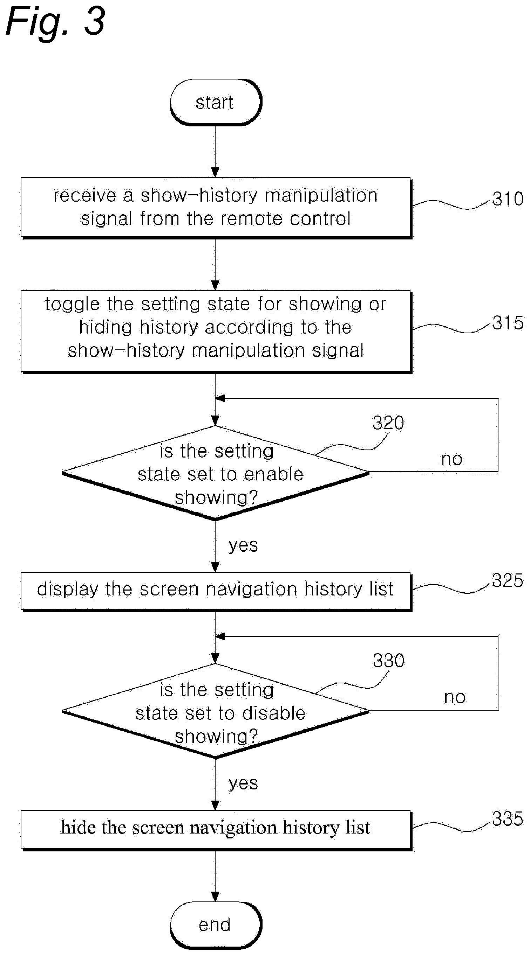

FIG. 3 is a flowchart illustrating a method of showing a screen navigation history list according to an embodiment of the invention. Each of the operations described below may be performed by an individual component of the history management apparatus 100, but for better understanding and explanation, the operations will simply be described as being performed by the history management apparatus 100. The descriptions will be provided using an example in which it is assumed that the default setting is to not show the screen navigation history list on the screen.

In operation 310, the history management apparatus 100 may receive a show-history manipulation signal from the remote control.

In operation 315, the history management apparatus 100 may change and reconfigure the settings, by toggling the setting state for showing or hiding the history list, in accordance with the receiving of the show-history manipulation signal.

For example, the setting state can be set by default to disable showing. Afterwards, depending on the number of times the show-history manipulation signal is received, the setting state can be toggled and reconfigured to either one of the enable showing state or the disable showing state.

That is, if the show-history manipulation signal is received n times, the setting state for showing or hiding the history list can be set to the enable showing state, whereas if the show-history manipulation signal is received (*n*+1) times, the setting state can be set to the disable showing state.

In operation 320, the history management apparatus 100 may determine whether or not the setting state is set to the enable showing state.

If the setting state is set to the enable showing state, then in operation 325, the history management apparatus 100 may show the screen navigation history list on the display unit. Here, the history management apparatus 100 can order the screen navigation history items included in the screen navigation history list such that the most recently used screen navigation history item is positioned at the top.

Also, if the screen navigation history items include screen navigation history items that were saved automatically and screen navigation history items that were saved according to the user's manipulation on the remote control, then the history management apparatus 100 can show the screen navigation history items with different visual information for the user-saved screen navigation history items and the automatically saved screen navigation history items to differentiate the two types.

Also, the history management apparatus 100 can show a thumbnail image on the display unit 125 for each of the screen navigation history items included in the screen navigation history list. Here, the thumbnail image of each screen navigation history item can be composed by using, for example, a representative image for the lowest-level menu of the screen navigation history item or a representative image for a particular program that can be accessed by the menu navigation path.

Also, each screen navigation history item included in the screen navigation history list can be assigned a shortcut key, which can be shown together with the screen navigation history item.

However, if the determination result of operation 320 is that the setting state is set to the disable showing state, then the procedure may remain on hold at operation 320.

Next, in operation 330, the history management apparatus 100 may determine whether the setting state is changed from the enable showing state to the disable showing state.

If the setting state is kept at the enable showing state, then the procedure may remain on hold at operation 330.

However, if the setting state is changed from the enable showing state to the disable showing state, then in operation 335, the history management apparatus 100 may provide control such that the screen navigation history list shown on the display unit 125 is hidden and no longer shown.

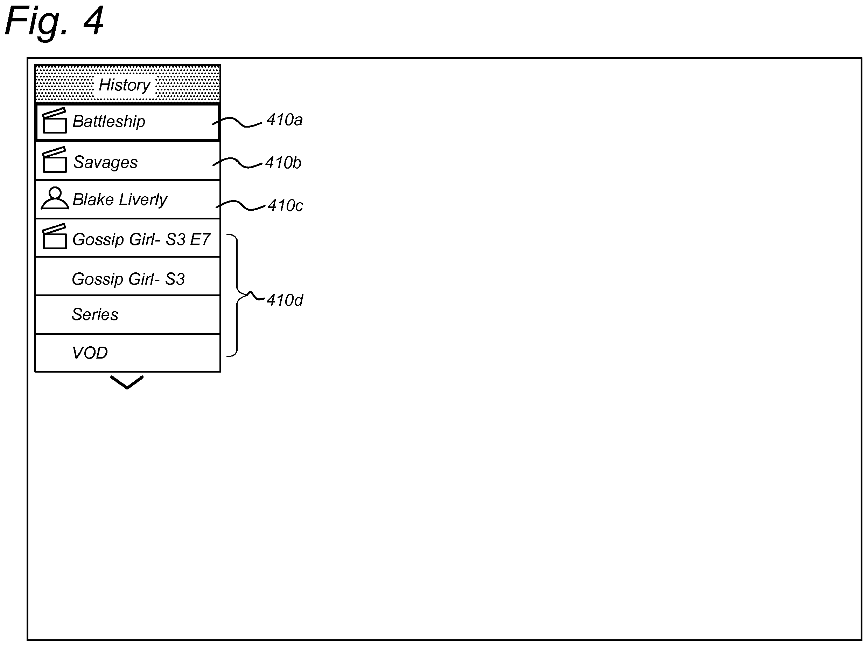

FIG. 4 through FIG. 7 each illustrate an example of a screen showing a screen navigation history list according to an embodiment of the invention. A method of managing a screen navigation history list at the history management apparatus 100 will be described below with reference to FIG. 4 through FIG. 7.

As illustrated in FIG. 4, a screen navigation history list may include individual screen navigation history items 410a, 410b, 410c, 410d.

Each screen navigation history item can include a menu navigation path for directly accessing a particular service, and can also include a navigation path to a lower-level menu included in a particular program.

For example, referring to screen navigation history item 410d, this screen navigation history item may include a screen (or menu) navigation path for accessing the program of Gossip Girl, season 3, episode 7 (hereinafter referred to as a "first program" for convenience).

As illustrated by numeral 410d, while the screen associated with a first menu (a first screen) is being shown, the navigation path to the first program may include the first screen as a first path of the screen navigation history item. Then, the screen after any one menu (e.g. for VOD) from the first screen is selected and the lower-level menus (hereinafter referred to as "second menus" for convenience) of the selected menu are shown can be included in the navigation path to the first program as a second screen. Also, when "series" is selected from among the second menus via the second screen, then a screen (referred to herein as a "third screen") for the lower-level menus under "series" (referred to herein as "third menus") may be shown, and the screen navigation path for the third screen can be included in the navigation paths for the first program. Afterwards, if a particular service, such as Gossip Girl episode 7, is selected while the third screen is being shown, then the corresponding screen or page navigation path can be included as a fourth screen in the navigation path to the first program.

As illustrated above, a user may be inconvenienced by having to input several manipulations on the remote control to select from a number of menus and thus access a list of programs preferred by the user. However, by saving the navigation paths for accessing the user's preferred program list as history items, in accordance with an embodiment of the invention, the user can directly access a particular program list in a convenient manner with just one manipulation on the remote control.

For example, suppose a user wishes to select episode 7 from season 3 of Gossip Girl. Using remote control manipulations, the user may select the "VOD" menu from the entire collection of menus, select the "series" menu from the VOD menu, and select the "Gossip Girl season 3" menu. Then, the user may manipulate the remote control to select "Episode 7". In this case, the user faces the inconvenience of having to manipulate the remote control at least four times.

However, when using the screen navigation history list, the user can easily access the desired program with one remote control manipulation by directly selecting Gossip Girl season 3 episode 7, registered previously, from the menu usage history list.

Furthermore, when the user wishes to select Gossip Girl season 3 episode 8, if the screen navigation history list is being used, the user can directly access the "Gossip Girl season 3" menu, from the menu navigation path for Gossip Girl season 3 episode 7, and then select "Episode 8", thereby greatly increasing convenience in user input.

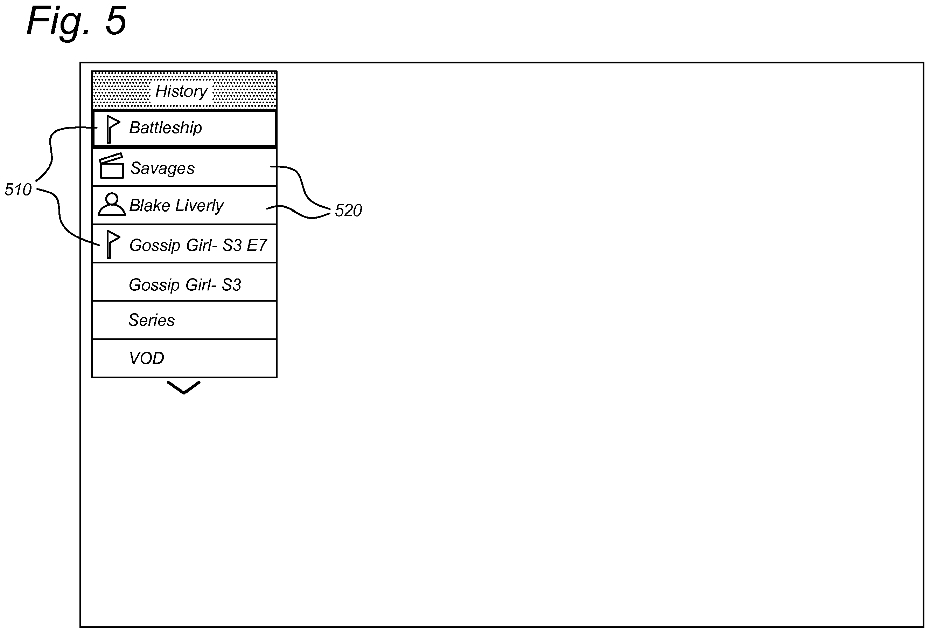

FIG. 5 illustrates a screen in which screen navigation history items 510 saved by the user's remote control manipulation and screen navigation history items 520 saved automatically by the history management apparatus 100 are shown differentiated from each other. As illustrated in FIG. 5, separate icons can be shown together with the screen navigation history items 510 saved (generated) by user manipulation, to distinguish these from the automatically saved (generated) screen navigation history items 520. In another example, the history management apparatus 100 can show a screen navigation history list that includes only the screen navigation history items 510 saved (generated) by user manipulation and show another screen navigation history list that includes only the screen navigation history items 520 saved (generated) automatically, with the different screen navigation history lists implemented in separate areas of the screen.

Also, when a user selects a particular screen history item already present in the screen navigation history list, a bookmark can be shown for the screen navigation history item.

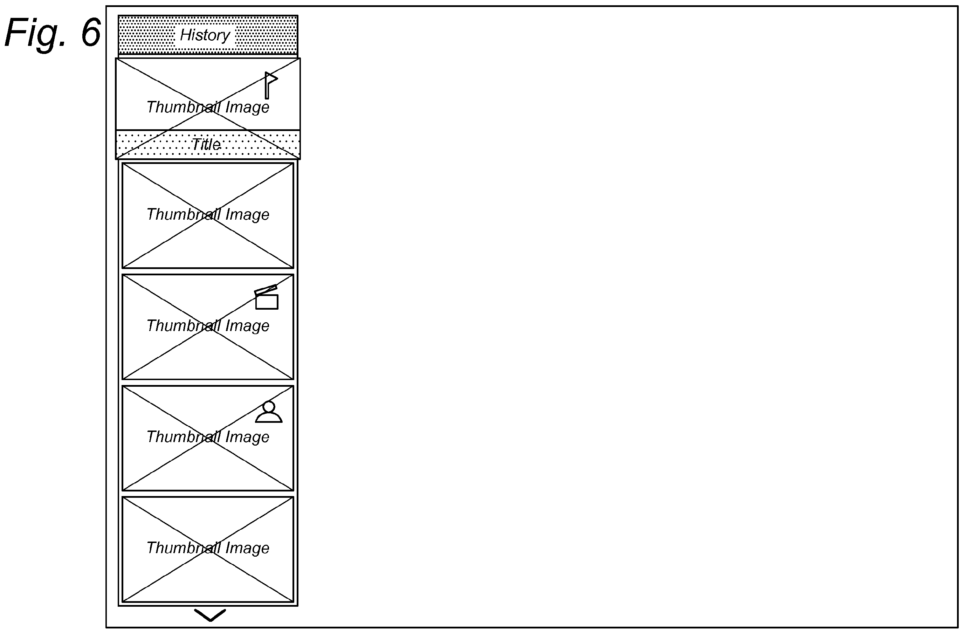

Also, as illustrated in FIG. 6, the history management apparatus 100 can show each of the screen navigation history items of the screen navigation history list in the form of a thumbnail image, rather than its name, via the display unit 125. As described above, a thumbnail image corresponding to each screen navigation history item in each screen navigation history list can be an image for a particular service, an image corresponding to the screen, page, service, or menu at the lowest level of the navigation path, or an image arbitrarily designated by the user.

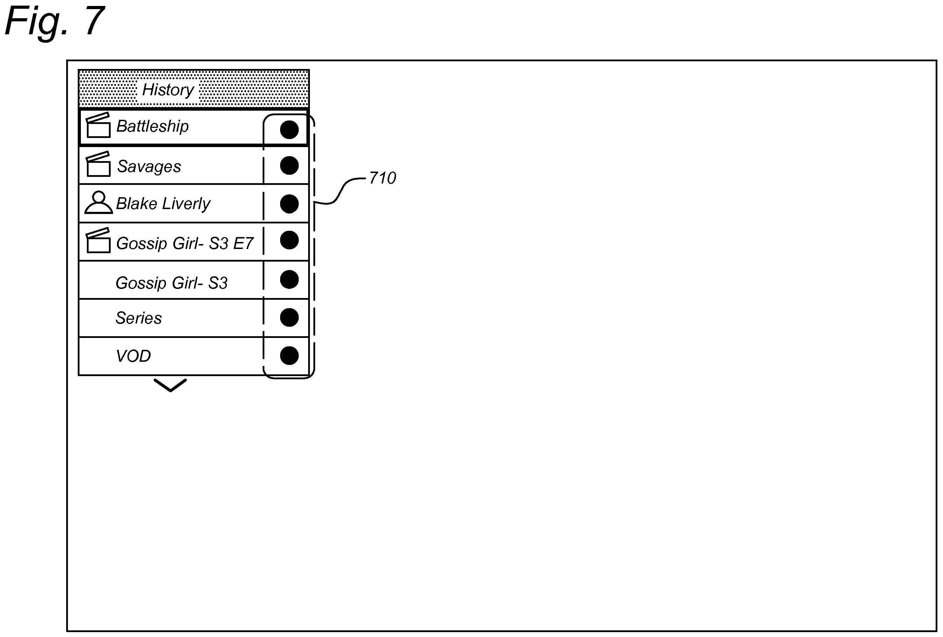

FIG. 7 illustrates a screen that shows a user interface 710 for editing each of the screen navigation history items included in the screen navigation history list. For better understanding and convenient explanation, FIG. 7 illustrates an example of a user interface for editing the screen navigation history items that only allows deletions. Of course, other forms of a user interface can be used, such as for changing the name, thumbnail image, etc., of a screen navigation history item.

Also, the setup can be implemented such that the position of at least one screen navigation history item included in the screen navigation history list can be changed by the user in accordance with a remote control manipulation signal (e.g. an edit signal).

As described above, in order to provide greater ease in using a TV, for which it can be more inconvenient to make inputs compared to a computer or a mobile communication terminal, the history management apparatus 100 can save and manage menu navigation paths to services enjoyed by the user (e.g. programs, contents, games, shopping, etc.) and thereby enable the user to make inputs more conveniently.

While it is not illustrated in FIG. 7, the screen navigation history list shown in FIG. 7 can additionally include a user interface for editing a lock setting for each screen navigation history item. In this case, the history management apparatus 100 can set a lock function for at least one of the screen navigation history items included in the screen navigation history list that are selected by the user's manipulation of the remote control. This provides the advantage of preventing other users from easily deleting the screen navigation history list.

According to an embodiment of the invention, a method of saving a history of navigation paths between screens, pages, or menus for accessing a particular screen or service preferred by the user can be implemented in the form of program instructions that can be executed by various devices capable of processing electronic information, and can be recorded on a storage medium. The storage medium or recorded medium can include program instructions, data files, data structures, etc., alone or in combination.

The program instructions recorded on the medium can be designed and configured specifically for the present invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magnetooptical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc.

The hardware mentioned above can be made to operate as one or more software modules that perform the actions of the embodiments of the invention, and vice versa.

While the present invention has been described above using particular examples, including specific elements, by way of limited embodiments and drawings, it is to be appreciated that these are provided merely to aid the overall understanding of the present invention, the present invention is not to be limited to the embodiments above, and various modifications and alterations can be made from the disclosures above by a person having ordinary skill in the technical field to which the present invention pertains.

## Claims

1. An apparatus for history management, the apparatus being adapted to be connected to a TV and comprising:
an input unit configured to receive a manipulation signal from a remote control; and a control unit configured to save a screen navigation history list including screen navigation history items, wherein each screen navigation history item includes at least one navigation path for accessing at least one of a particular screen, a particular shopping, a particular game and a particular broadcast-related program in the TV,
the control unit being configured to generate the screen navigation history item and to save the screen navigation history item in the screen navigation history list when the manipulation signal is received through the remote control,
the control unit being further configured to automatically generate the screen navigation history item and to save the screen navigation history item in the screen navigation history list also when the manipulation signal is not received, if a setting condition of the apparatus is set for automatically generating the screen navigation history item,
the control unit being further configured to control a display of the screen navigation history list with a most recently saved screen navigation history item placed at a top position of the screen navigation history list, and to control the display of the screen navigation history list with automatically saved screen navigation history items visually differentiated from screen navigation history items saved according to the manipulation signal,
wherein at least one of the screen navigation history item is associated to a shortcut key for directly accessing at least one of a particular screen, a particular shopping, a particular game and a particular broadcast-related program.
the control unit controls to make said direct access if the input unit receives in input from the remote control a manipulation signal corresponding to the shortcut key.

2. The apparatus for history management of claim 1, wherein the screen navigation history item comprising a navigation path for accessing an on-demand program and further comprises a navigation path to a lower-level menu included in the on-demand program if the user want to access an on-demand program,
and the lower-level-menu is a menu subordinate to the particular menu.

3. The apparatus for history management of claim 1, further comprising:
a display unit; and
a setting unit configured to adjust settings for at least one of said setting condition and a setting state, the setting condition relating to generating a unit screen navigation history item for a navigation path according to an at least one of a particular screen, a particular shopping, a particular game and a particular broadcast-related program and automatically saving in the screen navigation history list, and the setting state relating to toggling according to a show-history manipulation signal received by way of the input unit.

4. The apparatus for history management of claim 3, wherein the setting state is set to disabling the showing by default,
and if the show-history manipulation signal is received n times, the setting state is changed to enabling the showing, and if the show-history manipulation signal is received (n+1) times, the setting state is changed to disabling the showing,
and the control unit shows or hides the screen navigation history list on the display unit according to the setting state.

5. The apparatus for history management of claim 3, wherein the control unit provides control such that a screen navigation history item included in the screen navigation history list is shown on the display unit as a thumbnail image corresponding to the screen navigation history item.

6. The apparatus for history management of claim 1, wherein if an edit signal for editing one of the screen navigation history item included in the screen navigation history list is received from the remote control, the control unit deletes the screen navigation history item or changes a showing priority of the screen navigation history item according to the edit signal.

7. A method for history management, the method comprising:
receiving in an apparatus a manipulation signal from a remote control, the apparatus being adapted to be connected to a TV; and
saving screen navigation history items, wherein each screen navigation history item includes at least one navigation path for accessing at least one of a particular screen, a particular shopping, a particular game and a particular broadcast-related program in the TV according to the receiving of the manipulation signal with the navigation path included in a screen navigation history list, wherein
the screen navigation history item is generated and saved when the manipulation signal is received through the remote control,
and wherein the screen navigation history item is generated and saved also when the manipulation signal is not received, if a setting condition of the apparatus is set for automatically generating the screen navigation history item, wherein
the screen navigation history list is displayed on the TV with a most recently saved screen navigation history item placed at a top position of the screen navigation history list, and with automatically saved screen navigation history items visually differentiated from screen navigation history items saved according to the manipulation signal,
a particular screen, a particular shopping, a particular game and a particular broadcast-related program is directly accessible through a shortcut key in at least one of the screen navigation history item, and wherein said direct access in made by providing a manipulation signal from the remote control corresponding to the shortcut key.

8. The method of claim 7, further comprising, after the saving:
receiving a show-history manipulation signal from the remote control;
changing a setting according to the show-history manipulation signal such that a setting state is toggled, the setting state configured for toggling between an enable showing state and a disable showing state; and
showing or hiding the screen navigation history list on a screen according to the setting state.

9. The method of claim 8, wherein showing the screen navigation history list on the screen according to the setting state comprises:
showing the screen navigation history item included in the screen navigation history list on the display unit as a thumbnail image corresponding to the screen navigation history item.

10. A recording medium readable by a digital processing device adapted to be connected to a TV, tangibly embodying a program of instructions executable by the digital processing device to perform a method for history management according to claim 7.

## Patentansprüche

1. Vorrichtung zur Historienverwaltung, wobei die Vorrichtung daran angepasst ist, mit einem Fernsehgerät verbunden zu sein, und umfasst:
eine Eingabeeinheit, die dazu konfiguriert ist, ein Manipulationssignal von einer Fernbedienung zu empfangen; und
eine Steuereinheit, die dazu konfiguriert ist, eine Bildschirmnavigationshistorienliste zu speichern, die Bildschirmnavigationshistorieneinträge umfasst, wobei jeder Bildschirmnavigationshistorieneintrag wenigstens einen Navigationspfad zum Zugreifen auf wenigstens einen bestimmten Bildschirm, einen bestimmten Einkauf, ein bestimmtes Spiel und ein bestimmtes rundfunkbezogenes Programm in dem Fernsehgerät umfasst,
wobei die Steuereinheit dazu konfiguriert ist, den Bildschirmnavigationshistorieneintrag zu erzeugen und den Bildschirmnavigationshistorieneintrag in der Bildschirmnavigationshistorienliste zu speichern, wenn das Manipulationssignal durch die Fernbedienung empfangen wird,
wobei die Steuereinheit ferner dazu konfiguriert ist, den Bildschirmnavigationshistorieneintrag automatisch zu erzeugen und den Bildschirmnavigationshistorieneintrag in der Bildschirmnavigationshistorienliste auch zu speichern, wenn das Manipulationssignal nicht empfangen wird, falls eine Einstellbedingung der Vorrichtung zum automatischen Erzeugen des Bildschirmnavigationshistorieneintrags eingestellt ist,
wobei die Steuereinheit ferner dazu konfiguriert ist, eine Anzeige der Bildschirmnavigationshistorienliste zu steuern, wobei ein zuletzt gespeicherter Bildschirmnavigationshistorieneintrag an einer obersten Position der Bildschirmnavigationshistorienliste platziert ist, und die Anzeige der Bildschirmnavigationshistorienliste zu steuern, wobei automatisch gespeicherte Bildschirmnavigationshistorieneinträge visuell verschieden von gemäß dem Manipulationssignal gespeicherten Bildschirmnavigationshistorieneinträgen dargestellt sind,
wobei wenigstens einer der Bildschirmnavigationshistorieneinträge einer Kurzwahltaste zum direkten Zugreifen auf einen bestimmten Bildschirm, einen bestimmten Einkauf, ein bestimmtes Spiel und ein bestimmtes rundfunkbezogenes Programm zugeordnet ist,
wobei die Steuereinheit eine Steuerung zum Vornehmen des direkten Zugriffs durchführt, falls die Eingabeeinheit in einer Eingabe von der Fernbedienung ein der Kurzwahltaste entsprechendes Manipulationssignal empfängt.

2. Vorrichtung zur Historienverwaltung nach Anspruch 1, wobei der Bildschirmnavigationshistorieneintrag einen Navigationspfad zum Zugreifen auf ein On-Demand-Programm umfasst und ferner einen Navigationspfad zu einem in dem On-Demand-Programm umfassten Menü einer niedrigeren Ebene umfasst, falls der Benutzer auf ein On-Demand-Programm zugreifen möchte,
und das Menü der niedrigeren Ebene ein dem bestimmten Menü untergeordnetes Menü ist.

3. Vorrichtung zur Historienverwaltung nach Anspruch 1, ferner umfassend:
eine Anzeigeeinheit; und
eine Einstelleinheit, die dazu konfiguriert ist, Einstellungen für die Einstellbedingung und/oder einen Einstellzustand anzupassen, wobei sich die Einstellbedingung auf ein Erzeugen eines Einheitsbildschirmnavigationshistorieneintrags für einen Navigationspfad gemäß einem bestimmten Bildschirm, einem bestimmten Einkauf, einem bestimmten Spiel und/oder einem bestimmten rundfunkbezogenen Programm und ein automatisches Speichern in der Bildschirmnavigationshistorienliste bezieht, und sich der Einstellzustand auf ein Hin- und Herschalten gemäß einem mittels der Eingabeeinheit empfangenen Manipulationssignal zum Zeigen der Historie bezieht.

4. Vorrichtung zur Historienverwaltung nach Anspruch 3, wobei der Einstellzustand so eingestellt ist, das das Vorführen standardmäßig deaktiviert ist,
und, falls das Manipulationssignal zum Zeigen der Historie n-mal empfangen wird, der Einstellzustand so geändert wird, dass das Vorführen aktiviert ist, und, falls das Manipulationssignal zum Zeigen der Historie (n+1)-mal empfangen wird, der Einstellzustand so geändert wird, dass das Vorführen deaktiviert ist,
und die Steuereinheit die Bildschirmnavigationshistorienliste auf der Anzeigeeinheit gemäß dem Einstellzustand zeigt oder verbirgt.

5. Vorrichtung zur Historienverwaltung nach Anspruch 3, wobei die Steuereinheit eine Steuerung derart bereitstellt, dass ein in der Bildschirmnavigationshistorienliste umfasster Bildschirmnavigationshistorieneintrag auf der Anzeigeeinheit als ein dem Bildschirmnavigationshistorieneintrag entsprechendes Miniaturansichtsbild gezeigt wird.

6. Vorrichtung zur Historienverwaltung nach Anspruch nach Anspruch 1, wobei, falls ein Editiersignal zum Editieren eines der in der Bildschirmnavigationshistorienliste umfassten Bildschirmnavigationshistorieneinträge von der Fernbedienung empfangen wird, die Steuereinheit den Bildschirmnavigationshistorieneintrag löscht oder eine VorführPriorität des Bildschirmnavigationshistorieneintrags gemäß dem Editiersignal ändert.

7. Verfahren zur Historienverwaltung, wobei das Verfahren umfasst:
Empfangen eines Manipulationssignals von einer Fernbedienung in einer Vorrichtung, wobei die Vorrichtung daran angepasst ist, mit einem Fernsehgerät verbunden zu sein; und
Speichern von Bildschirmnavigationshistorieneinträgen, wobei jeder Bildschirmnavigationshistorieneintrag wenigstens einen Navigationspfad zum Zugreifen auf wenigstens einen bestimmten Bildschirm, einen bestimmten Einkauf, ein bestimmtes Spiel und ein bestimmtes rundfunkbezogenes Programm in dem Fernsehgerät umfasst, gemäß dem Empfangen des Manipulationssignals, wobei der Navigationspfad in einer Bildschirmnavigationshistorienliste umfasst ist, wobei
der Bildschirmnavigationshistorieneintrag erzeugt und gespeichert wird, wenn das Manipulationssignal durch die Fernbedienung empfangen wird,
und wobei der Bildschirmnavigationshistorieneintrag auch erzeugt und gespeichert wird, wenn das Manipulationssignal nicht empfangen wird, falls eine Einstellbedingung der Vorrichtung zum automatischen Erzeugen des Bildschirmnavigationshistorieneintrags eingestellt ist, wobei
die Bildschirmnavigationshistorienliste auf dem Fernsehgerät angezeigt wird, wobei ein zuletzt gespeicherter Bildschirmnavigationshistorieneintrag an einer obersten Position der Bildschirmnavigationshistorienliste platziert ist, und wobei automatisch gespeicherte Bildschirmnavigationshistorieneinträge visuell verschieden von gemäß dem Manipulationssignal gespeicherten Bildschirmnavigationshistorieneinträgen dargestellt sind,
wobei auf einen bestimmten Bildschirm, einen bestimmten Einkauf, ein bestimmtes Spiel und ein bestimmtes rundfunkbezogenes Programm durch eine Kurzwahltaste in wenigstens einem der Bildschirmnavigationshistorieneinträge direkt zugegriffen werden kann, und wobei der direkte Zugriff durch Bereitstellen eines der Kurzwahltaste entsprechenden Manipulationssignals von der Fernbedienung vorgenommen wird.

8. Verfahren nach Anspruch 7, ferner umfassend, nach dem Speichern:
Empfangen eines Manipulationssignals zum Zeigen der Historie von der Fernbedienung;
Ändern einer Einstellung gemäß dem Manipulationssignal zum Zeigen der Historie derart, dass ein Einstellzustand hin- und hergeschaltet wird, wobei der Einstellzustand zum Hin- und Herschalten zwischen einem Aktivieren eines Vorführzustands und einem Deaktivieren eines Vorführzustands konfiguriert ist; und
Zeigen oder Verbergen der Bildschirmnavigationshistorienliste auf einem Bildschirm gemäß dem Einstellzustand.

9. Verfahren nach Anspruch 8, wobei das Zeigen der Bildschirmnavigationshistorienliste auf dem Bildschirm gemäß dem Einstellzustand umfasst:
Zeigen des in der Bildschirmnavigationshistorienliste umfassten Bildschirmnavigationshistorieneintrags auf der Anzeigeeinheit als ein dem Bildschirmnavigationshistorieneintrag entsprechendes Miniaturansichtsbild.

10. Aufzeichnungsmedium, das durch eine digitale Verarbeitungsvorrichtung lesbar ist, die daran angepasst ist, mit einem Fernsehgerät verbunden zu sein, und das ein Programm von Instruktionen greifbar verkörpert, die durch die digitale Verarbeitungsvorrichtung ausführbar sind, um ein Verfahren zur Historienverwaltung nach Anspruch 7 durchzuführen.

## Revendications

1. Appareil de gestion d'historique, l'appareil étant adapté pour être relié à une télévision et comportant :
- une unité d'entrée configurée pour recevoir un signal de manipulation en provenance d'une télécommande ; et
- une unité de commande configurée pour sauvegarder une liste d'historiques de navigation par écran comprenant des éléments d'historique de navigation par écran, où chaque élément d'historique de navigation par écran comprend au moins un chemin de navigation pour accéder au moins à un élément parmi un écran particulier, une course particulière, un jeu particulier et un programme particulier de radiodiffusion à la télévision,
l'unité de commande étant configurée pour générer l'élément d'historique de navigation par écran et pour sauvegarder l'élément d'historique de navigation par écran dans la liste d'historiques de navigation par écran lorsque le signal de manipulation est reçu par le biais de la télécommande,
l'unité de commande étant en outre configurée pour générer automatiquement l'élément d'historique de navigation par écran et pour sauvegarder l'élément d'historique de navigation par écran dans la liste d'historiques de navigation par écran également lorsque le signal de manipulation n'est pas reçu, si une condition de réglage de l'appareil est réglée pour générer automatiquement l'élément d'historique de navigation par écran,
l'unité de commande étant en outre configurée pour commander un affichage de la liste d'historiques de navigation par écran avec un élément d'historique de navigation par écran le plus récemment sauvegardé placé en position haute de la liste d'historiques de navigation par écran, et pour commander l'affichage de la liste d'historiques de navigation par écran avec automatiquement des éléments d'historique de navigation par écran sauvegardés différenciés visuellement par rapport aux éléments d'historique de navigation par écran sauvegardés en fonction du signal de manipulation,
dans lequel au moins l'un des éléments d'historique de navigation par écran est associé à un raccourci-clavier accédant directement à au moins un élément parmi un écran particulier, une course particulière, un jeu particulier et un programme de radiodiffusion particulier,
l'unité de commande commandant pour faire ledit accès direct si l'unité d'entrée reçoit en entrée en provenance de la télécommande un signal de manipulation correspondant au raccourci-clavier.

2. Appareil de gestion d'historique selon la revendication 1, dans l'élément d'historique de navigation par écran comportant un chemin de navigation pour accéder à un programme à la demande comporte en outre un chemin de navigation à un menu de plus bas niveau compris dans le programme à la demande si l'utilisateur veut accéder à un programme à la demande,
et le menu de plus bas niveau est un menu subordonné au menu particulier.

3. Appareil de gestion d'historique selon la revendication 1, comportant en outre :
une unité d'affichage ; et
une unité de réglage configurée pour ajuster des réglages pour au moins un élément parmi ladite condition de réglage et un état de réglage, la condition de réglage concernant la génération d'un élément d'historique de navigation par écran unitaire pour un chemin de navigation en fonction d'au moins un élément parmi un écran particulier, une course particulière, un jeu particulier et un programme particulier de radiodiffusion et la sauvegarde automatiquement dans la liste d'historiques de navigation par écran, et l'état de réglage concernant la bascule en fonction d'un signal de manipulation d'historique de présentation reçu à l'aide de l'unité d'entrée.

4. Appareil de gestion d'historique selon la revendication 3, dans lequel l'état de réglage est réglé pour désactiver la présentation par défaut,
et si le signal de manipulation d'historique de présentation est reçu n fois, l'état de réglage est modifié pour activer la présentation, et si le signal de manipulation d'historique de présentation est reçu (n +1) fois, l'état de réglage est modifié pour désactiver la présentation,
et l'unité de commande présente ou cache la liste d'historiques de navigation par écran sur l'unité d'affichage en fonction de l'état de réglage.

5. Appareil de gestion d'historique selon la revendication 3, dans lequel l'unité de commande fournit une commande de telle sorte qu'un élément d'historique de navigation par écran compris dans la liste d'historiques de navigation par écran est présenté sur l'unité d'affichage sous la forme d'une imagette correspondant à l'élément d'historique de navigation par écran.

6. Appareil de gestion d'historique selon la revendication 1, dans lequel si un signal d'édition pour éditer l'un des éléments d'historique de navigation par écran compris dans la liste d'historiques de navigation par écran est reçu en provenance de la télécommande, l'unité de commande efface l'élément d'historique de navigation par écran ou modifie une priorité de présentation de l'élément d'historique de navigation par écran en fonction du signal d'édition.

7. Procédé de gestion d'historique, le procédé consistant à :
- recevoir dans un appareil un signal de manipulation en provenance d'une télécommande, l'appareil étant adapté pour être relié à une télévision ; et
- sauvegarder des éléments d'historique de navigation par écran, où chaque élément d'historique de navigation par écran comprend au moins un chemin de navigation pour accéder au moins à un élément parmi un écran particulier, un magasinage particulier, un jeu particulier et un programme particulier de radiodiffusion à la télévision en fonction de la réception du signal de manipulation avec le chemin de navigation compris dans une liste d'historiques de navigation par écran,
où l'élément d'historique de navigation par écran est généré et sauvegardé lorsque le signal de manipulation est reçu par le biais de la télécommande,
et où l'élément d'historique de navigation par écran est généré et sauvegardé également lorsque le signal de manipulation n'est pas reçu, si une condition de réglage de l'appareil est réglée pour générer automatiquement l'élément d'historique de navigation par écran, où
la liste d'historiques de navigation par écran est affichée sur la télévision avec un élément d'historique de navigation par écran le plus récemment sauvegardé placé en position haute de la liste d'historiques de navigation par écran, et automatiquement avec des éléments d'historique de navigation par écran sauvegardés différenciés visuellement par rapport aux éléments d'historique de navigation par écran sauvegardés en fonction du signal de manipulation,
un écran particulier, une course particulière, un jeu particulier et un programme particulier de radiodiffusion est directement accessible par le biais d'un raccourci-clavier dans au moins l'un des éléments d'historique de navigation par écran, et où ledit accès direct est fait en fournissant un signal de manipulation en provenance de la télécommande correspondant au raccourci-clavier.

8. Procédé selon la revendication 7, consistant en outre, après la sauvegarde, à :
- recevoir un signal de manipulation d'historique de présentation en provenance de la télécommande ;
- modifier un réglage en fonction du signal de manipulation d'historique de présentation de telle sorte qu'un état de réglage est basculé, l'état de réglage étant configuré pour basculer entre un état de présentation activé et un état de présentation désactivé ; et
- présenter ou cacher la liste d'historiques de navigation par écran sur un écran en fonction de l'état de réglage.

9. Procédé selon la revendication 8, dans lequel la présentation de la liste d'historiques de navigation par écran sur l'écran en fonction de l'état de réglage consiste à :
- présenter l'élément d'historique de navigation par écran compris dans la liste d'historiques de navigation par écran sur l'unité d'affichage sous la forme d'une imagette correspondant à l'élément d'historique de navigation par écran.

10. Support d'enregistrement pouvant être lu par un dispositif de traitement numérique adapté pour être relié à une télévision, incorporant de manière tangible un programme d'instructions pouvant être exécutées par le dispositif de traitement numérique pour mettre en oeuvre un procédé de gestion d'historique selon la revendication 7.
